# EUROPÄISCHE PATENTSCHRIFT

(11) **EP 0 696 727 B1**
(45) Veröffentlichungstag und Bekanntmachung des Hinweises auf die Patenterteilung: **13.11.1996**
(21) Anmeldenummer: 95106679.4
(22) Anmeldetag: 04.05.1995
(51) Int. Cl.: G01K 5/32, G05D 23/275

(54) **Temperaturfühler mit einem Kapillarrohrsystem**
Temperature sensor with a capillary tube system
Capteur de température à système à tube capillaire

(30) Priorität: 12.08.1994 CH 2500/94; 11.10.1994 CH 3053/94
(43) Veröffentlichungstag der Anmeldung: 14.02.1996
(73) Patentinhaber: Landis & Gyr Technology Innovation AG, 6301 Zug (CH)
(72) Erfinder: Mannhart, Jevgenij, CH-6330 Cham (CH); Jandl, Josef, CH-6300 Zug (CH)

(56) Entgegenhaltungen:
- GB-A- 2 247 316
- US-A- 4 660 387

## Beschreibung

Die Erfindung betrifft einen Temperaturfühler mit einem Kapillarrohrsystem der im Oberbegriff des Anspruchs 1 genannten Art.

Solche Temperaturfühler eignen sich beispielsweise als Temperaturwächter, insbesondere als Frostschutzwächter, wie auch als Temperaturregler. Sie können als alleinstehende Geräte ausgebildet oder zur Zusammenarbeit mit einem externen Regler oder einem Gebäudeleitsystem vorgesehen sein.

Aus dem Datenblatt 3447D von Landis & Gyr vom Januar 1991 ist ein als Frostschutzfühler dienender Temperaturfühler der im Oberbegriff des Anspruchs 1 genannten Art bekannt. Das Gehäuse ist ein Aluminiumgehäuse. Im Gehäuse ist ein Heizelement eingebaut, so dass die Innentemperatur auf +18° C geregelt werden kann. Diese Ausführung erfordert bei tiefen Aussentemperaturen eine relativ grosse Heizleistung. Als Sensor zur Erfassung der tiefsten Temperatur im Kapillarrohr ist ein System eingesetzt, das aus einem Hallelement und einem Magneten besteht, wobei sich der Magnet in Funktion der tiefsten Temperatur im Kapillarrohr am Hallelement vorbeibewegt.

Der Erfindung liegt die Aufgabe zugrunde, einen auf einem Kapillarrohrsystem basierenden Temperaturfühler vorzuschlagen, der einfach herstellbar und im Werk eichbar ist. Bei einer vorteilhaften Ausgestaltung soll der Temperaturfühler mit geringem Energieverbrauch betreibbar sein, auch wenn das Gehäuse des Temperaturfühlers tiefen Aussentemperaturen ausgesetzt ist.

Die Erfindung ist im Anspruch 1 gekennzeichnet. Weiterbildungen und vorteilhafte Ausgestaltungen der Erfindung ergeben sich aus den abhängigen Ansprüchen.

Nachfolgend wird ein Ausführungsbeispiel der Erfindung anhand der Zeichnung näher erläutert.

Es zeigen:
- Fig. 1: einen ersten Temperaturfühler,
- Fig. 2: eine Leiterplatte und
- Fig. 3: einen zweiten Temperaturfühler.

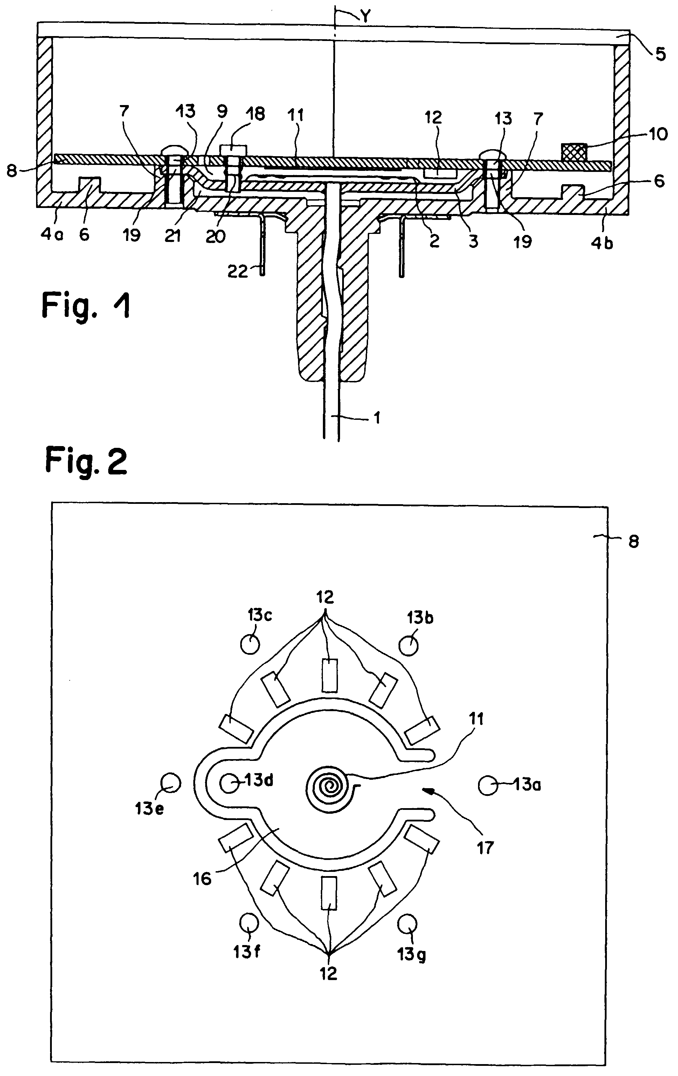

Die Fig. 1 zeigt in einer Schnittdarstellung einen Temperaturfühler mit einem Kapillarrohrsystem, das sich aus einer Kapillare 1, einer Membrane 2 und einer Grundplatte 3 zusammensetzt. Die vorzugsweise runde Grundplatte 3 weist einen flachen Teil auf und ist gegen den Rand hin so geformt, dass sich eine tellerartige Form ergibt, wobei entlang des Randes Bohrungen 19 angebracht sind zur Befestigung im Gehäuse des Temperaturfühlers, das aus zwei gleichen Gehäuseteilen 4a und 4b mit Formteilen 6 und 7 sowie einer Abdeckplatte 5 besteht. Die Membrane 2 ist luftdicht auf dem flachen Teil der Grundplatte 3 aufgeschweisst oder aufgelötet und entlang einer zur Grundplatte 3 senkrechten Achse y verschiebbar.

Der Temperaturfühler enthält weiter eine mit Bohrungen 13 versehene Leiterplatte 8 mit Anschlussklemmen 10, einem Sensor 11 und mit Widerständen 12, sowie eine Justierschraube 18 und ein Federlement 20. Der Sensor 11 ist mit Vorteil ein induktiver Sensor in der Form einer Spule. Die Spule kann als eine einfache Spule auf der der Membrandose 2 zugewandten Seite der Leiterplatte 8 oder auch als eine auf beiden Seiten der Leiterplatte 8 ausgebildete Doppelspule ausgeführt sein. Der Sensor 11 kann aber auch ein Hallelement sein, in welchem Fall auf der Membrane 2 ein nicht dargestellter Magnet vorhanden ist, der sich bei einer Auslenkung der Membrane 2 auf das Hallelement zubewegt.

Die Leiterplatte 8 und die Grundplatte 3 sind mittels durch die Bohrungen 13 bzw. 19 geführter Schrauben auf den Formteilen 7 befestigt, so dass sich eine stabile mechanische Verbindung zwischen dem Sensor 11 und der Grundplatte 3 des Kapillarrohrsystems ergibt, wobei der Abstand zwischen der Leiterplatte 8 und der Grundplatte 3 vorgegeben ist. Weiter bilden die Grundplatte 3 und die Leiterplatte 8 einen die Membrane 2 eng umschliessenden Innenraum 9. Die Formteile 7 sind in ihren Abmessungen so bemessen, dass zwischen der Grundplatte 3 und der Gehäuseaussenwand ein freier Zwischenraum 21 verbleibt. Im Zwischenraum 21 befindet sich Luft, so dass die Grundplatte 3 dank diesem geometrischen Aufbau gegen aussen wärmemässig gut isoliert ist. Die seitlichen Abmessungen der Leiterplatte 8 sind kleiner als die Innenabmessungen des Gehäuses, so dass die Leiterplatte 8 das Gehäuse nicht berührt. Eine weder in Art noch Stärke voraussehbare mechanische Beanspruchung des Gehäuses, die beispielsweise bei der Montage des Temperaturfühlers im Feld vorkommen kann, führt somit nicht zu einer Deformation der das Signal des Sensors 11 beeinflussenden Teile wie Grundplatte 3 oder Leiterplatte 8. Damit kann auch die Eichung des Temperaturfühlers im Werk vorgenommen werden, ohne dass die Gefahr besteht, dass die Eichung nach der Montage im Feld nicht mehr stimmt.

Bei einem für den Einsatz in einem Frostschutzwächter vorgesehenen Kapillarrohrsystem ist es für einen einwandfreien Betrieb erforderlich, dass die Temperatur der Membrane 2 einen vorgegebenen Wert von beispielsweise 18° C nicht unterschreitet. Das Kapillarrohrsystem ist mit einer vorbestimmten Menge eines geeigneten Gases gefüllt. Die Membrane 2 darf einerseits bei einer Temperatur von beispielsweise 65° C nicht wegen zu hohen Gasdruckes zerstört werden, andererseits muss der Gasdruck bei Temperaturen oberhalb des Gefrierpunktes von 0° C genügend gross sein, um die Membrane 2 aus der Ruhelage auszulenken. Sinkt die Temperatur aufeiner vorgegebenen Mindestlänge der Kapillare 1 von z.B. 100 mm auf den Gefrierpunkt oder darunter, dann reicht der Druck im Kapillarrohrsystem nicht mehr aus, um die Membrane 2 um mehr als einen vorbestimmten Wert auszulenken. Der Heizung der Membrane 2 dienen die Widerstände 12. Der von der Grundplatte 3 und der Leiterplatte 8 umschlossene Innenraum 9 umfasst ein kleines, gegen aussen warmetechnisch gut isoliertes Luftvolumen, so dass die Membrane 2 mit kleiner elektrischer Leistung heizbar ist. Ein Leck in der Kapillare 1 oder in der Membrane 2 wie auch ein Ausfall der Heizung führen zu einem Signal des Sensors 11, das eine tiefe Temperatur darstellt, so dass die Frostschutzfunktion ausgelöst wird: Der als Frostschutzwächter eingesetzte Temperaturfühler ist eigensicher.

Die Fig. 2 zeigt eine besondere Ausführung der Leiterplatte 8 auf der der Membrane 2 (Fig. 1) zugewandten Seite. Die Leiterplatte 8 weist eine in etwa kreisförmig ausgeschnittene Zunge 16 auf, auf der eine aus Leiterbahnen gebildete, als Sensor 11 dienende Flachspule vorhanden ist, deren Durchmesser etwas kleiner als der Durchmesser der Membrane 2 ist. Zehn Widerstände 12 sind ausserhalb der Zunge 16 entlang des Randes zur Zunge 16 angeordnet. Sie beschränken die Bewegungsfreiheit der Membrane 2 entlang der Achse y nicht. Die Anordnung der Widerstände 12 ausserhalb der Zunge 16 gestattet es, die Breite des Überganges 17 relativ schmal zu halten, da keine für Heizströme von mehreren 100 mA auszulegenden Leiterbahnen auf die Zunge 16 zu führen sind. Die Leiterplatte 8 weist im Bereich ausserhalb der Widerstände 12 in ringförmiger Anordnung sechs Bohrungen 13a, 13b, 13c, 13e, 13f und 13g auf zur Befestigung der Leiterplatte 8 auf den Formteilen 7 der Gehäuseteile 4a und 4b, wobei die Bohrung 13a beim Übergang 17 von der Leiterplatte 8 zur Zunge 16 und symmetrisch zu diesem Übergang 17 angebracht ist. Auf dem dem Übergang 17 gegenüberliegenden freien Ende des Ausschnittes 16 ist eine weitere Bohrung 13d zur Aufnahme der Justierschraube 18 vorhanden. Mit der Justierschraube 18 und dem Federelement 20 ist die y-Lage der Zunge 16 am Ort der fiktiven Achse y (Fig. 1) innerhalb vorbestimmter Grenzen einstellbar. Aufdiese Weise ist eine mechanische Justierung des Temperaturfühlers möglich, bei welcher die y-Lage des Sensors 11 gegenüber der Membrane 2 oder allenfalls gegenüber dem Magneten genau abgestimmt wird. Dank der Anordnung des Sensors 11 auf der Zunge 16 ist die mechanische Entkopplung des Sensors 11 gegenüber dem Gehäuse wie auch gegenüber den Anschlussklemmen 10, über welche die elektrische Verbindung des Temperaturfühlers zu einem übergeordneten Gerät erfolgt, weiter verbessert. Das Formteil 6 ist als beschrankendes Element vorgesehen, das die Bewegungsfreiheit der Leiterplatte 8 unterhalb der Anschlussklemmen 10 in y-Richtung derart beschränkt, dass ein Bruch der Leiterplatte 8 beim Übergang 17 wahrend der Verdrahtung des Temperaturfühlers im Feld ausgeschlossen ist. Diese Sicherheitsfunktion gegen einen Bruch der Leiterplatte 8 kann bei fehlendem Formteil 6 auch eine Nut in der Seitenwand des Gehäuseteils 4b übernehmen, in welche die leiterplatte 8 im Normalzustand berührungslos hineinragt.

Der Temperaturfühler ist aufeinfachste Weise zusammenbaubar, indem die Gehäuseteile 4a und 4b so zusammengesteckt werden, dass sie die Kapillare 1 und die Grundplatte 3 des Kapillarrohrsystems umschliessen. Mit einer Montagefeder 22, die für die Befestigung des Temperaturfühlers z.B. in einem Lüftungskanal vorgesehen ist, ist die Verbindung der beiden Gehäuseteile 4a und 4b zusätzlich gesichert. Die Leiterplatte 8 ist in normaler, eventuell zweiseitiger Leiterplattertechnik herstellbar und inklusive der für die Membrane 2 erforderlichen Heizung in moderner SMD-Technik bestückbar. Die Grundplatte 3 ist aus Stahl gefertigt, so dass das Gehäuse nach dem Zusammenbau der Gehäuseteile 4a und 4b, der leiterplatte 8 und der Grundplatte 3 eine relativ stabile Form aufweist. Gegebenenfalls erfolgt vor dem Anbringen der Abdeckplatte 5 die mechanische Justierung des Temperaturfühlers durch Betätigung der Justierschraube 18. Sowohl die Gehäuseteile 4a und 4b wie auch die Abdeckplatte 5 sind mit Vorteil mit Schnappfedern und entsprechenden Öffnungen versehen, so dass die Montage dieser Teile schraubenlos durchführbar ist. Zur Verdrahtung im Feld ist die Verbindung zwischen der Abdeckplatte 5 und den Gehäuseteilen 4a und 4b lösbar ausgebildet. Die Gehäuseteile 4a und 4b sind so ausgebildet, dass sie eine Tülle bilden, die die Kapillare 1 umfasst und einen gewissen mechanischen Schutz bietet.

Die Spule ist elektrisch charakterisiert durch ihre Induktivität L und ihren ohmschen Innenwiderstand R. Aufgrund der physikalischen Wechselwirkungen zwischen der Spule und der Membrane 2 ändern sich die Induktivität L und/oder der Widerstand R in Abhängigkeit des Abstandes zwischen der Spule und der Membrane 2. Diese Änderungen sind messbar als Änderung der Resonanzfrequenz und/oder der Dämpfung, wenn die Spule elektrisch in einem Serie- oder Parallelresonanzkreis angeordnet ist. Eine solche Beschaltung der Spule ergibt eine geringe Anfälligkeit gegenüber HF-Störungen, da der Sensor 11 als solches selbst Teil eines Resonanzkreises ist.

Die Membrane 2 besteht wegen der erforderlichen mechanischen Eigenschaften wie Festigkeit, Elastizität, Linearität der Auslenkung in Function der Temperatur des Gases bzw. Dehnstoffes des Kapillarrohrsystems aus einem Material mit geeigneten mechanischen Eigenschaften wie z.B. Stahl oder eine legierung aus Kupfer-Beryllium. Bei der Verwendung einer Spule als induktiver Sensor 11 ist es vorteilhaft, die Membrane 2 mit einer elektrisch gut leitenden Schicht wie Aluminium, Kupfer, Messing, etc. zu beschichten, da eine solche Schicht zu einem grösseren Signalhub des Sensors 11 zwischen der Auslenkung bei der minimal und bei der maximal zu messenden Temperatur führt.

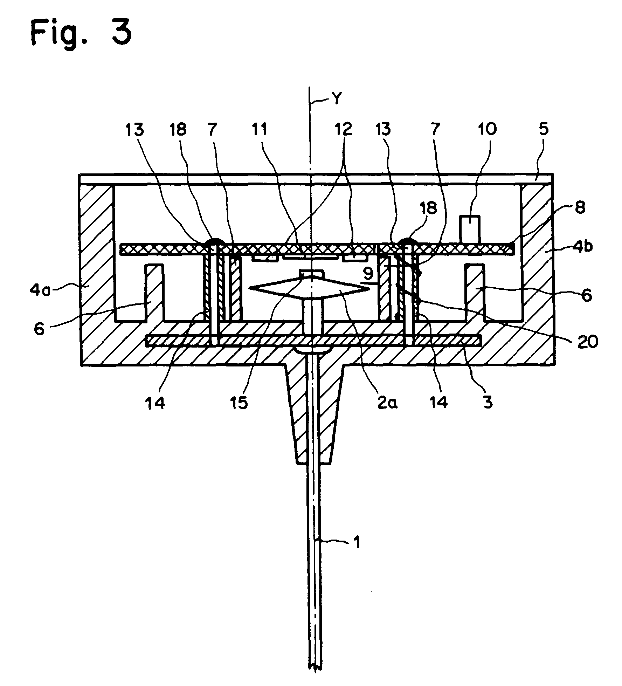

Die Fig. 3 zeigt eine andere Ausführung des Temperaturfühlers, bei dem die Grundplatte 3 eine plane Form aufweist. Anstelle der auf die Grundplatte 3 aufgeschweissten Membrane 2 ist eine Membrandose 2a vorhanden, die entlang der Achse y verschiebbar ist. Die Leiterplatte 8 ist mittels Distanzbolzen 14 annähernd parallel zur Grundplatte 3 auf der Grundplatte 3 befestigt. Die Befestigung der Leiterplatte 8 über die Distanzbolzen 14 direkt auf der Grundplatte 3 ergibt wiederum eine stabile mechanische Verbindung zwischen dem Sensor 11 und der Grundplatte 3 des Kapillarrohrsystems, wobei der Abstand zwischen der Leiterplatte 8 und der Grundplatte 3 vorgegeben ist. Die seitlichen Abmessungen der Leiterplatte 8 sind Kleiner als die Innenabmessungen des Gehäuses, so dass die Leiterplatte 8 das Gehäuse nicht berührt. Einer der Distanzbolzen 14 kann in seiner Länge etwas kürzer als die anderen Distanzbolzen 14 bemessen und mit einem Federelement 20 versehen sein, so dass die y-Lage der Zunge 16 (Fig. 2) innerhalb vorbestimmter Grenzenjustierbar ist. Die Gehäuseteile 4a und 4b umschliessen die Grundplatte 3 beidseitig und bilden mit den Formteilen 7 und der Leiterplatte 8 einen die Membrandose 2a umschliessenden Raum 9, der wärmetechnisch gut gegen aussen isoliert ist.

Eine auf der Leiterplatte 8 integrierte Spule als Sensor 11 bietet gegenüber einem Hallelement die Vorteile, dass die Spule im gleichen Prozess wie die übrigen Leiterbahnen auf der Leiterplatte 8 entsteht, dass die y-Lage der Spule allein durch die Lage der Oberfläche der Leiterplatte 8 bestimmt ist, welche entweder wegen der tellerartigen Form der Grundplatte 3 (Fig. 1) oder durch die Distanzbolzen 14 (Fig. 2) fest vorgegeben ist, und dass die Montage eines Magneten 15 entfällt. Bei einem in einem IC-Gehäuse verpackten Hallelement ist dessen y-Lage abhängig von den Toleranzen, mit welchen seine y-Lage im IC-Gehäuse bestimmt ist und mit welchen es auf der Leiterplatte 8 montiert ist. Weiter ist das aus Hallelement und Magnet 15 bestehende Sensorsystem empfindlicher als das aus Spule und Membrane 2 bzw. Membrandose 2a bestehende Sensorsystem gegen gegenseitige Versetzungen weg von der Achse y, d.h. die Anforderungen an die Zentrierung aufeine gemeinsame Achse y ist beim ersten System höher. Insgesamt resultiert bei der Verwendung einer aus Leiterbahnen hergestellten Spule eine wesentlich Kleinere montagebedingte Streuung des Sensorsignales von Temperaturfühler zu Temperaturfühler, so dass eine mechanische Justierung der Spule gegenüber der Membrane 2 bzw. Membrandose 2a nicht erforderlich ist.

Solche Temperaturfühler mit einem Kapillarrohrsystem eignen sich neben der Verwendung als Frostschutzwächter auch als Temperaturbegrenzer, Temperaturwächter oder Temperaturregler, bei denen die entsprechende Funktion der Begrenzung, Überwachung oder Regelung elektronisch statt mechanisch realisiert ist. Eine weitere Verwendungsmöglichkeit besteht in einem elektronisch gesteuerten Heizkörperventil.

## Patentansprüche

1. Temperaturfühler mit einem Kapillarrohrsystem, das eine Kapillare (1), eine Membrane (2) oder Membrandose (2a) und eine Grundplatte (3) aufweist, wobei die Membrane (2) bzw. Membrandose (2a) gegenüber der Grundplatte (3) entlang einer zur Grundplatte (3) senkrechten Achse (y) bewegbar ist, mit einer Leiterplatte (8), mit einem Sensor (11) zur Erfassung der y-Lage der Membrane (2) bzw. Membrandose (2a) und mit einem Gehäuse (4a, 4b, 5), dadurch gekennzeichnet, dass der Sensor (11) auf der Leiterplatte (8) angeordnet ist, dass die Leiterplatte (8) direkt oder mittels Distanzbolzen (14) auf der Grundplatte (3) und annähernd parallel zur Grundplatte (3) befestigt ist und dass die Leiterplatte (8) das Gehäuse (4a, 4b, 5) seitlich nicht berührt.

2. Temperaturfühler nach Anspruch 1, dadurch gekennzeichnet, dass der Sensor (11) auf einem Ausschnitt in der Form einer Zunge (16) der Leiterplatte (8) angeordnet ist und dass die Leiterplatte (8) ausserhalb der Zunge (16) auf der Grundplatte (3) befestigt ist.

3. Temperaturfühler nach Anspruch 1 oder 2, dadurch gekennzeichnet, dass die Zunge (16) eine Bohrung (13d) aufweist zur Aufnahme einer Justierschraube (18), mittels derer der Abstand des Sensors (11) zur Membrane (2) bzw. Membrandose (2a) einstellbar ist.

4. Temperaturfühler nach einem der Ansprüche 1 bis 3, dadurch gekennzeichnet, dass das Gehäuse (4a, 4b, 5) mit Formteilen (7) ausgebildet ist, die zusammen mit der Leiterplatte (8) einen die Membrane (2) bzw. Membrandose (2) umschliessenden Innenraum (9) ergeben und dass auf der Leiterplatte (8) auf der dem Innenraum (9) zugewandten Seite Widerstände (12) zur Heizung der Membrane (2) bzw. Membrandose (2a) angeordnet sind.

5. Temperaturfühler nach einem der Ansprüche 1 bis 4, dadurch gekennzeichnet, dass das Gehäuse zwei gleiche zusammensteckbare Gehäuseteile (4a, 4b) aufweist.

6. Temperaturfühler nach einem der Ansprüche 1 bis 5, dadurch gekennzeichnet, dass die Grundplatte (3) eine tellerartige Form aufweist und dass die Membrane (2) auf der Grundplatte (3) aufgeschweisst oder aufgelötet ist.

7. Temperaturfühler nach einem der Ansprüche 1 bis 6, dadurch gekennzeichnet, dass der Sensor (11) eine Spule ist.

8. Temperaturfühler nach Anspruch 7, dadurch gekennzeichnet, dass die Spule aus Leiterbahnen der Leiterplatte (8) gebildet ist.

9. Temperaturfühler nach einem der Ansprüche 1 bis 8, dadurch gekennzeichnet, dass die Membrane (2) bzw. Membrandose (2a) mit einer elektrisch gut leitenden Schicht bedeckt ist.

10. Temperaturfühler nach einem der Ansprüche 1 bis 6, dadurch gekennzeichnet, dass der Sensor (11) ein Hallelement ist und dass auf der Membrane (2) bzw. Membrandose (2a) ein Magnet (15) befestigt ist.

## Claims

1. A temperature sensor comprising a capillary tube system which has a capillary tube (1), a diaphragm (2) or diaphragm capsule (2a) and a base plate (3), wherein the diaphragm (2) or diaphragm capsule (2a) is movable relative to the base plate (3) along an axis (y) perpendicular to the base plate (3), further comprising a printed circuit board (8), a sensor (11) for detecting the y-position of the diaphragm (2) or diaphragm capsule (2a), and a housing (4a, 4b, 5) characterised in that the sensor (11) is arranged on the printed circuit board (8), that the printed circuit board (8) is fixed directly or by means of spacer pins (14) on the base plate (3) and approximately parallel to the base plate (3) and that the printed circuit board (8) does not laterally touch the housing (4a, 4b, 5).

2. A temperature sensor according to claim 1 characterised in that the sensor (11) is arranged on a cut-out portion in the form of a tongue (16) of the printed circuit board (8) and that the printed circuit board (8) is fixed on the base plate (3) outside the tongue (16).

3. A temperature sensor according to claim 1 or claim 2 characterised in that the tongue (16) has a bore (13d) for receiving an adjusting screw (18), by means of which the spacing of the sensor (11) relative to the diaphragm (2) or diaphragm capsule (2a) is adjustable.

4. A temperature sensor according to one of claims 1 to 3 characterised in that the housing (4a, 4b, 5) is formed with shaped portions (7) which together with the printed circuit board (8) provide an internal space (9) enclosing the diaphragm (2) or diaphragm capsule (2a) and that arranged on the printed circuit board (8) on the side towards the internal space (9) are resistors (12) for heating the diaphragm (2) or diaphragm capsule (2a).

5. A temperature sensor according to one of claims 1 to 4 characterised in that the housing has two identical housing portions (4a, 4b) which can be fitted together.

6. A temperature sensor according to one of claims 1 to 5 characterised in that the base plate (3) is of a tray-like shape and that the diaphragm (2) is welded or soldered on the base plate (3).

7. A temperature sensor according to one of claims 1 to 6 characterised in that the sensor (11) is a coil.

8. A temperature sensor according to claim 7 characterised in that the coil is formed from conductor tracks of the printed circuit board (8).

9. A temperature sensor according to one of claims 1 to 8 characterised in that the diaphragm (2) or diaphragm capsule (2a) is covered with a layer which is a good electrical conductor.

10. A temperature sensor according to one of claims 1 to 6 characterised in that the sensor (11) is a Hall element and that a magnet (15) is fixed on the diaphragm (2) or diaphragm capsule (2a).

## Revendications

1. Capteur de température comprenant un système à tube capillaire qui comprend un tube capillaire (1), une membrane (2) ou une membrane en boîte (2a) et une plaque d'assise (3), la membrane (2) ou la membrane en boîte (2a) étant mobile par rapport à la plaque d'assise (3) le long d'un axe (y) perpendiculaire à la plaque d'assise (3). capteur comprenant par ailleurs une plaquette à circuits imprimés (8), un détecteur (11) de détection de la position y de la membrane (2) ou de la membrane en boîte (2a) et un boîtier (4a, 4b, 5), caractérisé en ce que le détecteur (11) est disposé sur la plaquette à circuits imprimés (8). en ce que la plaquette à circuits imprimés (8) est fixée directement ou au moyen de chevilles d'entretoisement (14) sur la plaque d'assise (3) et à peu près parallèlement à la plaque d'assise (3) et en ce que la plaquette à circuits imprimés (8) n'est pas en contact latéralement avec le boîtier (4a, 4b, 5).

2. Capteur de température selon la revendication 1, caractérisé en ce que le détecteur (11) est disposé sur une découpure de la plaquette à circuits imprimés (8) qui a la forme d'une languette (16) et en ce que la plaquette à circuits imprimés (8) est fixée à l'extérieur de la languette (16) à la plaque d'assise (3).

3. Capteur de température selon la revendication 1 ou 2, caractérisé en ce que la languette (16) comporte un trou (13d) de logement d'une vis d'ajustage (18) à l'aide de laquelle la distance séparant le détecteur (11) et la membrane (2) ou la membrane en boîte (2a) est réglable.

4. Capteur de température selon l'une des revendications 1 à 3, caractérisé en ce que le boîtier (4a. 4b, 5) comporte des éléments profilés (7) qui forment avec la plaquette à circuits imprimés (8) un volume interne (9) qui enveloppe la membrane (2) ou la membrane en boîte (2a) et en ce que des résistances (12) de chauffage de la membrane (2) ou de la membrane en boîte (2a) sont disposées sur le côté de la plaquette à circuits imprimés (8) qui est tourné vers le volume interne (9).

5. Capteur de température selon l'une des revendications 1 à 4, caractérisé en ce que le boîtier comprend deux parties identiques de boîtier emboîtables (4a, 4b).

6. Capteur de température selon l'une des revendications 1 à 5. caractérisé en ce que la plaque d'assise (3) a une forme en cuvette et en ce que la membrane (2) est rapportée par soudage ou brasage sur la plaque d'assise (3).

7. Capteur de température selon l'une des revendications 1 à 6, caractérisé en ce que le détecteur (11) est une bobine.

8. Capteur de température selon la revendication 7, caractérisé en ce que la bobine est formée de pistes conductrices de la plaquette à circuits imprimés (8).

9. Capteur de température selon l'une des revendications 1 à 8, caractérisé en ce que la membrane (2) ou la membrane en boîte (2a) est revêtue d'une couche bonne conductrice de l'électricité.

10. Capteur de température selon l'une des revendications 1 à 6, caractérisé en ce que le détecteur (11) est un élément de Hall et en ce qu'un aimant (15) est fixé sur la membrane (2) ou sur la membrane en boîte (2a).
